# EUROPÄISCHE PATENTSCHRIFT

(11) **EP 1 777 100 B1**
(45) Veröffentlichungstag und Bekanntmachung des Hinweises auf die Patenterteilung: **02.03.2011**
(21) Anmeldenummer: 06019586.4
(22) Anmeldetag: 19.09.2006
(51) Int. Cl.: B60N 2/24

(54) **Lehnenanordnung**
Backrest system
Système de dossier

(30) Priorität: 19.10.2005 DE 202005016461 U
(43) Veröffentlichungstag der Anmeldung: 25.04.2007
(73) Patentinhaber: Gustav Bruns Maschinenbau und Förderanlagen GmbH & Co. KG, 26689 Apen (DE)
(72) Erfinder: Bruns, Gerit, 26160 Bad Zwischenahn (DE)
(74) Vertreter: Eisenführ, Speiser & Partner

(56) Entgegenhaltungen:
- EP-A- 1 717 098
- WO-A-88/01967
- WO-A-2005/037597
- DE-A1- 3 447 780
- DE-A1- 3 521 233

## Beschreibung

Die Erfindung betrifft eine Lehnenanordnung zum Einbau in ein Fahrzeug, insbesondere in ein Kraftfahrzeug, zur Beförderung von Personen, insbesondere Rollstuhlfahrern.

Zur Beförderung von Rollstuhlfahrern in Kraftfahrzeugen ist es bekannt, dass ein Rollstuhlfahrer hierfür in seinem Rollstuhl in ein entsprechend großes Kraftfahrzeug beispielsweise mittels einer Rampe oder einer Hubvorrichtung geschoben und dort gegen Verrutschen gesichert wird. Zusätzlich kann in dem Rollstuhl ein Sicherheitsgurt, der als Beckengurt ausgeführt ist, ein Herausrutschen des Rollstuhlfahrers aus seinem Rollstuhl verhindern.

Im Falle einer abrupten Bremsung oder eines Verkehrunfalls des Kraftfahrzeuges ist ein wie beschrieben gesicherter Rollstuhl für die Sicherheit des Rollstuhlfahrers jedoch nicht ausreichend. In einem solchen Fall ergibt sich insbesondere das Problem, dass der Rollstuhlfahrer mit Rücken und Kopf nach hinten geschleudert wird, und hierbei die Lehne des Rollstuhls für den Rücken nur wenig Halt und für dem Kopf gar keinen Halt bietet. Hier liegt ein großes Verletzungspotenzial. Darüber hinaus ist auch die Verwendung eines Beckengurts nur als unzureichende Rückhaltemaßnahme für den Fall eines Auffahrunfalls anzusehen.

Zur Verbesserung des Haltes für den Rücken und insbesondere für den Kopf eines in einem Kraftfahrzeug in seinem Rollstuhl beförderten Rollstuhlfahrers ist eine Lehne zum Einstecken bekannt. Eine solche Lehne wird in den Fahrzeugboden hinter den jeweiligen Rollstuhl mit Rollstuhlfahrer eingesteckt, und der Rollstuhl unmittelbar davor angeordnet und befestigt. Die eingesteckte Rückenlehne kann somit den Rücken und Kopf des in seinem Rollstuhl sitzenden Rollstuhlfahrers stützen.

Nachteilig ist hierbei die schwierige Handhabbarkeit solcher Lehnen. Zum Hineinfahren und Herausfahren eines Rollstuhls ist es erforderlich, dass eine solche steckbare Lehne aus ihrem Platz genommen und anderswo zwischengelagert wird. Darüber hinaus ist eine solche Rückenlehne vom eingesteckten Platz im Fahrzeugboden aus recht lang ausgestaltet, sodass entsprechend kräftige Stützen erforderlich sind, um auch am oben gelegenen Kopfteil entsprechend große Kräfte aufnehmen zukönnen. Dies bedingt, dass solche Stützen ein hohes Gewicht aufweisen, was deren Handhabbarkeit zusätzlich erschwert. Gerade bei häufigen Beförderungen von Rollstuhlfahrern besteht somit die Gefahr, dass das jeweilige Installieren der Rückenlehne unterbleibt, wodurch die oben beschriebenen Gefahren entstehen.

Der Stand der Technik kennt verschiedene Ausführungen von klappbaren Rückenlehnen für die Sitze in verschiedenen Fahrzeugen.

So ist aus der WO 88/01967 A1 ein schwenkbarer Sitz, insbesondere für einen Flugbegleiter in einem Flugzeug bekannt, dessen Rückenlehne zusammen mit dem Sitzteil um eine annähernd senkrechte Achse schwenkbar ausgebildet ist. Es ist hier vorgesehen, dass ein Hochklappen der Sitzfläche des Sitzes eine Feder aktiviert, die den hochgeklappten Sitz samt der zugehörigen Rückenlehne um die erwähnte Vertikalachse aus der Betriebsstellung heraus in eine Ruhestellung in einer seitlichen Mulde hinein schwenkt. Zur Sicherung von Rollstuhlfahrern in einem Kraftfahrzeug ist eine solche Konstruktion weder gedacht noch geeignet.

Die DE 35 21 233 A1 beschreibt eine Rückenlehne für einen Rücksitz beispielsweise in einem Krankentransportfahrzeug. Die Rückenlehne kann um eine Vertikalachse herum aus einer Ruhestellung, in der sie etwa parallel zur Fahrzeugseitenwand angeordnet ist, in eine etwa 90° Grad dazu ausgerichtete Betriebsstellung verschwenkt werden; dort wird die Rückenlehne mittels einer Verriegelungsvorrichtung an einem, unterhalb der ausgeschwenkten Rückenlehne verlaufenden Trägerprofil verriegelt. Auch diese Konstruktion ist weder dafür gedacht noch dazu geeignet, einen Rollstuhlfahrer zu stützen.

Schließlich offenbart die DE 34 47 780 A1 eine Einrichtung, mit der ein Rollstuhl in einem Kraftfahrzeug fixiert werden kann. An der Einrichtung kann ein Sitzgurt befestigt sein. Zum Abstützen des Rollstuhlfahrers selbst ist diese bekannte Einrichtung aber auch nicht gedacht oder geeignet.

Der Erfindung liegt somit die Aufgabe zu Grunde, die Beförderung von Rollstuhlfahrern zu erleichtern und dabei einen möglichst hohen Sicherheitsstand zu realisieren.

Erfindungsgemäß wird eine Lehnenanordnung zum Einbau in ein Kraftfahrzeug zur Beförderung von Rollstuhlfahrern mit einer Rückenlehne zum Stützen eines in Fahrtrichtung davor stehenden Rollstuhlfahrers, die um eine erste, vertikale Schwenkachse schwenkbar mit dem Fahrzeug verbindbar ist, vorgeschlagen. Eine solche Verbindung erfolgt beispielsweise an einer Fahrzeuginnenwand. Hierbei kann im eingebauten Zustand der Lehnenanordnung die Rückenlehne von einer Stauposition, bei der die Rückenlehne sich an der Seitenwand des Kraftfahrzeugs befindet, in eine Stützposition geschwenkt werden, bei der die Rückenlehne etwa quer zur Seitenwand angeordnet ist. Die Verstauposition ist hierbei von der Stützposition aus gesehen nach hinten angeordnet, so dass die Rückenlehne beim Schwenken aus der Verstauposition in die Stützposition im Wesentlichen nach vome geschwenkt wird. Wenn sich die Rückenlehne in einer Verstauposition befindet, ist Platz, um einen Rollstuhl hinein oder heraus zufahren. Ist ein Rollstuhl in einer Transportposition im Kraftfahrzeug abgestellt, kann die Rückenlehne auf einfache Weise von der Verstauposition von hinten gegen die Rückseite des Rollstuhls in die Sitzposition geklappt und dort verriegelt werden. Hierdurch ist auf einfache Weise eine Stützung des Rückens das Rollstuhlfahrers möglich. Zum Stützen des Kopfes des Rollstuhlfahrers weist die Rückenlehne bevorzugt eine Kopfstütze auf. Eine solche Kopfstütze kann gegenüber der Rückenlehne verstellbar, insbesondere höhenverstellbar angeordnet sein. Weiterhin besteht auch die Möglichkeit, die Rückenlehne zusammen mit der Kopfstütze in einstückiger Verbindung auszuführen,

Vorzugsweise ist ein Sicherheitsgurt vorgesehen, der zumindest teilweise an der Rückenlehne befestigt ist. Hierbei kommt insbesondere ein Dreipunktgurt in Betracht, der mit zwei Punkten beispielsweise an der Rückenlehne im Bereich der senkrechten Schwenkachse oder an der Seitenwand befestigt ist. Das Gurtschloss ist dann an der der vertikalen Schwenkachse abgewandten Seite der Rückenlehne angeordnet. Als Befestigung an der Rückenlehne ist auch eine Befestigung anzusehen, die an einem etwaigen Traggestell der Rückenlehne angreift. Durch die zumindest teilweise Befestigung des Sicherheitsgurts an der Rückenlehne kann dieser durch das Schwenken der Rückenlehne in die Stützposition für den Rollstuhlfahrer zur Benutzung bereitgestellt werden.

Zur Verbesserung der Funktionalität ist gemäß einer weiteren Ausführungsform die Lehnenanordung dadurch gekennzeichnet, dass ein Sitzabschnitt vorgesehen ist, der um eine horizontale Schwenkachse schwenkbar mit dem Fahrzeug verbindbar ist und die Rückenlehne und der Sitzabschnitt dabei voneinander unabhängig schwenkbar sind. Der Sitzabschnitt kann hierbei von einer Verstauposition in eine Sitzposition geschwenkt werden. Hierdurch wird ermöglicht, dass zu der Rückenlehne in Stützposition einen Sitzabschnitt bereitgestellt werden kann, um hierdurch die weitere Möglichkeit zuschaffen, eine Person ohne Rollstuhl befördern zu können. Ein an der Rückenlehne zumindest teilweise befestigter Sicherheitsgurt ist in diesem Fall auch für eine auf dem Sitzabschnitt sitzende Person verwendbar.

Günstig ist, wenn die horizontale Schwenkachse um eine zweite vertikale Schwenkachse schwenkbar mit dem Fahrzeug verbindbar ist. Zum Bewegen des Sitzabschnitts von der Sitzposition in die Verstauposition wird dieser zunächst um die horizontale Schwenkachse nach oben in eine senkrecht Position geklappt und dann gemeinsam mit der horizontalen Schwenkachse um eine zweite vertikale Schwenkachse mit seiner Unterseite zu der Fahrzeugseitenwand geschwenkt, an der er befestigt ist. Durch diese kombinierte Schwenkbewegung wird erreicht, dass ein Sitzpolster des Sitzabschnitts in der Verstauposition zum Fahrzeuginneren weist. Jegliche verletzungskritischen Elemente an der Unterseite des Sitzabschnitts sind somit in der Verstauposition vom Innenraum aus und somit von beförderten Personen aus schwer zu erreichen, wodurch ein etwaiges Verletzungsrisiko reduziert wird. Dies ist insbesondere bei der Beförderung eines Rollstuhlfahrers von Bedeutung.

In einem solchen Fall befindet sich nämlich die Rückenlehne in ihrer Stützposition und der Sitzabschnitt in seiner Verstauposition. Der Rollstuhlfahrer befindet sich vor der Rückenlehne in Stützposition und dem Sitzabschnitt in der Verstauposition, der mit seiner Polsterseite zum Rollstuhlfahrer weist.

Bevorzugt sind die erste und die zweite vertikale Schwenkachse zu einander parallel angeordnet. Beide vertikalen Schwenkachsen können auch zusammen fallen.

In einer bevorzugten Ausgestaltung ist die Lehnenanordnung dadurch gekennzeichnet, dass die Rückenlehne und/oder der Sitzabschnitt mittels einer Trägerkonstruktion an einer Befestigungsvorrichtung mit dem Fahrzeug verbindbar ist. Die Trägerkonstruktion trägt hierbei die Rückenlehne und/oder den Sitzabschnitt einschließlich der jeweiligen Schwenkmechanismen, Die Befestigungsvorrichtung ist fest mit einer Seitenwand des Fahrzeugs beispielsweise über eine Verklebung verbunden. Die Trägerkonstruktion und die Befestigungsvorrichtung sind zur Verbindung unter einander angepasst. Die Trägerkonstruktion kann somit mit der Befestigungsvorrichtung und damit mit dem Fahrzeug verbunden werden. Dadurch, dass die Trägerkonstruktion und die Befestigungsvorrichtung an einander angepasst sind, ist eine Verbindung auf einfache Weise zwischen Ihnen möglich, was beispielsweise auch eine Veränderung der Befestigungsposition der Trägerkonstruktion ermöglichen kann. Hierzu ist es günstig, dass die Befestigungsvorrichtung mindestens eine Schiene aufweist, und der Träger mit mindestens einem Gleitlager mit der mindestens einen Schiene, insbesondere in Fahrtrichtung des Fahrzeugs, verschiebbar verbindbar ist. Hierdurch kann die Position einer Lehnenanordnung und damit die Sitzposition eines Rollstuhlfahrers oder einer Person ohne Rollstuhl, die auf einem Sitzabschnitt sitzt, auf einfache Weise, insbesondere in Fahrtrichtung des Fahrzeugs verändert werden. Ebenso kann auf einen geänderten Bedarf an Beinfreiheit oder Stauraum reagiert werden. Darüber hinaus sind hierdurch mehrere Lehnenanordnungen mit veränderbarem Abstand hintereinander positionierbar. Die Trägerkonstruktion weist hierzu mindestens einen Gleiter auf, der in einer Schiene in Längsrichtung der Schiene gleitet. Beispielsweise können zwei parallele Schienen vorgesehen sein, in denen je ein Gleiter zum Bewegen in Längsrichtung der Schienen eingesetzt und an der Trägerkonstruktion befestigt ist.

Die Trägerkonstruktion kann auch eine Rückenlehne und einen Sitzabschnitt zusammen mit der Konstruktion für die Schwenkachse bzw. die Schwenkachsen gegeneinander beweglich verbinden und gemeinsam an der Befestigungsvorrichtung befestigen. Dabei ist es günstig, wenn die erste und die zweite vertikale Schwenkachse zusammenfallen, wenngleich die Rückenlehne und der Sitzabschnitt unabhängig voneinander um diese gemeinsame vertikale Achse verschwenkbar sind.

Bevorzugt ist dabei ein Gleiter von einer Schiene so umfasst, dass er nur in Längsrichtung der Schiene bewegbar ist. Die Schiene verhindert dabei auch das Herausspringen eines Gleiters. Die Anordnung eines Gleiters innerhalb einer Schiene erfolgt dabei beispielsweise so, dass der Gleiter nur entlang eines schmalen Streifens in Längsrichtung der Schiene aus dieser zur Verbindung mit der Trägerkonstruktion herausragt. Verletzungsrisiken, wie beispielsweise die Gefahr des Einklemmens von Fingern zwischen einer Schiene und einem Gleiter wird hierdurch gegenüber Schienen, bei denen der Gleiter außen läuft, verringert.

Gemäß einer weiteren Ausführungsform weist mindestens einer der Gleiter mindestens eine Rolle zum Rollen des Gleiter in der Schiene und/oder mindestens einen Gleitstein, insbesondere einen Sicherheitsstein zum Verhindern des Herausrutschens aus der Schiene in eine Richtung quer zur Längsrichtung der Schiene auf. Hierbei sind Rollen dazu vorgesehen, eine leichte Beweglichkeit des Gleiters entlang der jeweiligen Schiene zu ermöglichen. Gleichzeitig werden hohe Anforderungen an die Stabilität der Verbindung zwischen der Trägerkonstruktion und der bzw. den Schienen gestellt. Die hohen Anforderungen ergeben sich daraus, dass auch im Falle eines Verkehrsunfalls, bei dem sehr hohe Kräfte zwischen einzelnen verbundenen Elementen auftreten können, die Trägerkonstruktion nicht aus ihrer Schiene bzw, ihren Schienen herausspringen soll. Eine solche hohe Anforderung an die Stabilität ist durch Rollen alleine nicht erreichbar, sodass ein oder mehrere Gleitsteine zur Erhöhung der Stabilität vorgesehen sind. Da eine Positionsveränderung der Lehnenanordnung oftmals nur selten vorgenommen wird, kann auf Rollen mitunter verzichtet werden. Bei Verwendung mehrerer Gleiter ist es ebenfalls möglich, dass nicht jeder Gleiter stabilisierende Gleitsteine umfasst. Die Gleiter können auch so ausgebildet sein, dass sie nur durch Rollen geführt sind, und weitere Gleitsteine als Sicherheitssteine ausgebildet sind, die erst im Falle eines Vorfalls ihre Wirkung entfalten und ein Herausrutschen aus einer Schiene verhindern.

In einer weiteren Ausgestaltung ist die Lehnanordnung dadurch gekennzeichnet, dass zwei Schienen mit je einem Gleiter vorgesehen sind und einer der Gleiter mindestens eine Rolle und der andere Gleiter mindestens einen Gleitstein aufweist.

Vorzugsweise ist die Lehnenanordnung dadurch gekennzeichnet, dass die mindestens eine Schiene Rasterungen zum Fixieren je eines Gleiters in durch die Rasterung vorgegebenen Positionen aufweist. Hierdurch kann die Lehnenanordnung auf einfache Weise in den Schienen verschoben und gleichzeitig an einer Vielzahl von Positionen fest angeordnet werden. Eine solche Rasterung kann beispielsweise durch eine Vielzahl von Bohrungen vorgesehen sein, die quer zur Schienenlängsrichtung ausgebildet sind und in die zum Erreichen einer festen Position zumindest ein Stift eines Gleiters eingreift. Als weitere Beispiele für die Rasterung sind eine Vielzahl von Kerben angeführt, in die beispielsweise seitens des Gleiters eine an die jeweilige Kerbe angepasste Nase eingreift,

Günstig ist die Schiene bzw. sind die Schienen zum Befestigen der Lehnenanordnung im bestimmungsgemäßen Zustand parallel zu einem Fahrzeugboden und schräg oder horizontal an der Fahrzeugseitenwand verlaufend angeordnet. In der Regel ist bei horizontaler Anordnung des Fahrzeugbodens auch von einer horizontalen Anordnung der Schienen auszugehen. Somit kann die Lehnenanordnung entlang der Fahrzeugseitenwand in unterschiedlichen Positionen angeordnet und fixiert werden.

Bevorzugt weist die Lehnenanordnung wenigstens eine vertikale Säule zum Schwenken der Lehnenanordnung oder eines Teils davon auf. Die vertikale Säule fällt hierbei mit einer vertikalen Schwenkachse zusammen. Durch die Verwendung der Säule ist eine stabile Ausführung der Lehnenanordnung erreichbar. Hierbei kann die Säule an einer oder mehreren Schienen an.der Fahrzeugseitenwand befestigt werden. Hierdurch ist die vertikale Säule in horizontaler Richtung, insbesondere in Fahrtrichtung des Fahrzeugs entlang der Seitenwand verschiebbar, wodurch die Position der Lehnenanordnung innerhalb des Fahrzeugs verändert werden kann, Eine stabile Befestigung der Lehnenanordnung ist hierbei bei gleichzeitiger Flexibilität in Hinblick auf die Position der Lehnenanordnung im Fahrzeug möglich. Der Fußboden im Fahrzeug bedarf für die Anordnung einer oder mehrerer Lehnenanordnungen keiner Veränderung. Er kann beispielsweise flach ausgebildet sein, um ein einfaches Schieben eines Rollstuhls zu ermöglichen. Auch sind keinerlei Befestigungsvorrichtungen im Boden nötig, die beispielsweise auch eine Bodenreinigung ansonsten erschweren würden.

Wenn die Rückenlehne nicht benötigt wird, oder beim Herein- oder Herausfahren eines Rollstuhls im Wege ist, kann diese zur Seitenwand des Kraftfahrzeugs geschwenkt werden. In einer Ausführungsform ist die Lehnenanordnung dabei so gestaltet, dass die Rückenlehne in Bezug auf die Fahrtrichtung des Fahrzeugs wahlweise jeweils in eine vordere und eine hintere Stauposition an die Seitenwand verschwenkbar ist. Hierdurch ist eine hohe Funktionalität erreichbar, da unterschiedliche Staupositionen wählbar sind. Das Schwenken in eine hintere Stauposition ist immer dann sinnvoll, wenn von hinten oder nach hinten ein Rollstuhl an der Rückenlehne oder Kopfstütze vorbeizuschieben ist. Nach einem Einschieben von hinten kann die Rückenlehne oder Kopfstütze dann von der hinteren Stauposition direkt zum Rücken des Rollstuhlfahrers geschwenkt und dort arretiert werden. In anderen. Situationen, wenn beispielsweise keine Rollstuhlfahrer sondern sperrige Gegenstände transportiert werden sollen, kann es günstig sein, die Rückenlehne in ihre vordere Stauposition zu schwenken. In diesem Fall weist eine etwaige Polsterung der Rückenlehne zur Fahrzeugwand und ist damit dem Laderaum abgewandt. Das Frachtgut kann in diesem Fall die Polster weder verschmutzen noch beschädigen. Im Übrigen kann es vorkommen, dass weit hinten im Fahrzeug angeordnete und außerdem nach hinten geschwenkte Kopfstützen oder Rückenlehnen dem Schließen einer hinteren Tür entgegenstehen.

In einer günstigen Ausgestaltung ist die Rückenlehne um eine horizontale Funktionsachse schwenkbar. Hierbei weist die Rückenlehne vorzugsweise eine längliche Stützfläche zum Stützen des davor stehenden Rollstuhlfahrers auf. Zusätzlich ist es günstig, wenn die Funktionsachse senkrecht zur Stützfläche und außermittig dazu verläuft. Das heißt, sie verläuft außerhalb des Mittelpunktes der Stützfläche. Bevorzugt ist sie in weiterer Entfernung von der vertikalen Schwenkachse als dieser Mittelpunkt angeordnet. Eine solche längliche Stützfläche kann beispielsweise eine nichtquadratische, im Wesentlichen rechteckige Stützfläche sein. Eine solche Stützfläche ist bestimmungsgemäß senkrecht ausgebildet und weist dabei zu einer Person, die davor sitzt. Die Fläche ist dabei regelmäßig mit einem Polster versehen. Dabei weist sie in einer Schwenkposition eine große Ausdehnung in horizontaler und eine geringe Ausdehnung in vertikaler Richtung auf. In einer solchen Schwenkposition ist sie insbesondere als Kopfstütze für einen Nichtrollstuhlfahrer zu verwenden und entsprechend in Kopfhöhe einer sitzenden Person angeordnet. Wird eine solche in horizontaler Richtung lang ausgebildete Rückenlehne um die horizontale, senkrecht zu ihr verlaufende Funktionsachse um 90° geschwenkt, so steht sie dann senkrecht. In dieser Schwenkposition weist sie in senkrechter Richtung eine große und in horizontaler Richtung eine geringe Ausdehnung auf, wobei die Stützfläche nach wie vor zu der Person davor, nämlich in Fahrtrichtung weist.

Erfolgt ein solches Schwenken um eine außermittige Achse, so verändert sich nicht nur die Ausrichtung dieser Rückenlehne, sondern auch ihre Position in vertikaler Richtung. Verläuft beispielsweise die Funktionsachse bei Draufsicht auf die Stützfläche im rechten Teil, nämlich in größerer Entfernung von der vertikalen Schwenkachse als der Mittelpunkt der Stützfläche, so kann die Schwenkung um 90° um diese Funktionsachse so geschehen, dass der linke Teil nach unten geschwenkt wird. Hierdurch wird in funktionaler Betrachtung aus einer quer angeordneten Kopfstütze eine senkrecht angeordnete, schmale Rückenlehne. Gleichzeitig weist sie nun einen größeren Abstand zur Fahrzeugseitenwand auf.

In umgekehrter Weise ist ebenso eine senkrechte, schmale Rückenlehne um 90° nach oben funktional in eine Kopfstütze verschwenkbar.

Bevorzugt ist die Rückenlehne mittels eines Arms schwenkbar an der Befestigungsvorrichtung, insbesondere an der bzw. einer vertikalen Säule befestigt. Durch die Verwendung eines Arms kann der Abstand der Rückenlehne von der Fahrzeugseitenwand festgelegt werden. Günstig ist es, wenn der Arm ausziehbar ist. Hierdurch ist der Abstand zwischen Rückenlehne zur Befestigungsvorrichtung, insbesondere zur senkrechten Säule vorgebbar und auch veränderbar. Der Abstand von der Säule kann dabei auch in der Stützposition und in der Stauposition jeweils unterschiedliche Werte annehmen. Beispielsweise kann die Rückenlehne in ihrer Stützposition von der Seitenwand aus weit in das Fahrzeuginnere bei ausgezogenem Arm ragen, wohingegen sie in der Stauposition bei zusammengeschobenem Arm möglichst platzsparend untergebracht werden kann. Zum Ausziehen ist der Arm beispielsweise als Teleskoparm ausgebildet, oder der Arm kann beispielsweise aus einer Halterung an der Säule oder aus einer Halterung an der Rückenlehne herausgezogen werden. All diese und weitere Ausführungsbeispiele sind erfindungsgemäß ais Ausführungsbeispiele für einen ausziehbaren Arm zu verstehen.

In einer Ausführungsform trägt zumindest eine vertikale Säule einen Sitz, der aus Sitzabschnitt und Rückensitzlehne besteht, und zusätzlich eine separat dazu schwenkbare Rückenlehne. Hierbei ist ein Sitz mit Sitzabschnitt und Rückensitzlehne für einen Passagier ohne Rollstuhl vorgesehen. Er kann dabei die separat schwenkbare Rückenlehne als Kopfstütze verwenden. Um an derselben Stelle einen Rollstuhlfahrer zu befördern, kann der Sitz bestehend aus Sitzabschnitt und Rückensitzlehne zur Fahrzeugseitenwand geschwenkt werden. Hierfür ist die Lehnenanordnung bevorzugt so ausgebildet, dass aus einer Betriebsposition heraus in einem ersten Schritt der Sitzabschnitt um eine horizontale Achse gegen die Rückenlehne klappbar und in einem zweiten Schritt die Rückenlehne zusammen mit dem Sitzabschnitt um eine vertikale Achse, insbesondere um eine vertikale Säule an die Fahrzeugseitenwand schwenkbar ist.

Zur Beförderung eines Rollstuhlfahrers kann nun die verbleibende Rückenlehne dazu verwendet werden, ihn zu stützen, während er in seinem Rollstuhl sitzt. Hierzu wird vorzugsweise die verbleibende Rückenlehne um eine horizontale Funktionsachse so geschwenkt, dass sie anschließend senkrecht steht und als Rückenlehne für den Rollstuhlfahrer fungiert.

Um einen Rollstuhlfahrer zu befördern, kann dieser erfindungsgemäß mit seinem Rollstuhl in ein mit der Erfindung ausgestattetes Fahrzeug geschoben werden, Hierzu ist eine erfindungsgemäße Rückenlehne nach hinten in eine Stauposition geschwenkt, um mit dem Rollstuhlfahrer passieren zu können. Nachdem der Rollstuhlfahrer seine Position erreicht hat, wird die Rückenlehne von hinten zu seinem Kopf und Rücken geschwenkt und dort so arretiert, dass sie nicht in die Stauposition zurückschwenken kann. Der Rollstuhlfahrer ist nun grundsätzlich nach hinten gestützt. Zusätzlich können weitere Sicherungsmaßnahmen vorgenommen werden, wie beispielsweise das Anlegen eines Sicherheitsgurtes. Ein solcher Sicherheitsgurt kann erfindungsgemäß auch an der Lehnenanordnung vorgesehen sein. In einer bevorzugten Variante wird eine Rückenlehne, nachdem sie von hinten zum Kopf des Rollstuhlfahrers um eine vertikale Achse geschwenkt wurde, um eine horizontale, eine Polsterebene der Rückenlehne schneidende Funktionsachse so geschwenkt, dass die Kopfstütze nun besser als Rücklehne fungiert und sowohl Kopf als auch einen Teil des Rückens stützen kann.

Vorzugsweise ist ein Fahrzeug mindestens mit einer erfindungsgemäßen Lehnenanordnung ausgestattet. Dies schließt neben herkömmlichen Kraftfahrzeugen auch Elektrofahrzeuge ein. Eine weitere Ausführungsform umfasst ein Fahrzeug, das dadurch gekennzeichnet ist, dass mehrere Lehnanordnungen mit zwei Schienen mit je einem Gleiter vorgesehen sind, deren Trägerkonstruktion in mindestens zwei gemeinsamen Schienen eingreifen (geführt sind).

Nachfolgend ist die vorliegende Erfindung anhand eines Beispiels unter Bezugnahme auf die begleitenden Zeichnungen näher erläutert. Es zeigen:
- Fig. 1: zwei erfindungsgemäße in einem Kraftfahrzeug eingebaute Lehnenanordnungen mit einem zum Teil dargestellten Kraftfahrzeug in einer Seitenansicht,
- Fig. 2.: die Lehnenanordnungen gemäß Fig. 1 in einer Draufsicht, wobei keine Sicherheitsgurte dargestellt sind,
- Fig. 3: zwei Lehnenanordnungen gemäß Fig. 2 jedoch mit den beiden Sitzabschnitten und den beiden Rücklehnen jeweils in ihrer Verstauposition,
- Fig. 4: zwei erfindungsgemäße Lehnenanordnungen mit beiden Lehnen in ihrer Stützposition und einem Sitzabschnitt in Sitzposition und dem anderen Sitzabschnitt in seiner Verstauposition in einer Seitenansicht,
- Fig. 5: eine erfindungsgemäße in einem Fahrzeug eingebaute Lehnenanordnung mit einem zum Teil dargestellten Kraftfahrzeug in einer Rückansicht,
- Fig. 6: eine Lehnenanordnung gemäß Fig. 5 jedoch mit dem Sitzabschnitt in seiner Verstauposition und zusätzlich mit einem dargestellten Rollstuhl,
- Fig. 7: die untere Schiene gemäß Fig. 6 in vergrößerter Darstellung,
- Fig. 8: die obere Schiene gemäß Fig. 6 in vergrößerter Darstellung,
- Fig. 9: den Ausschnitt A der Fig. 7 in vergrößerter Darstellung,
- Fig. 10: eine in eine senkrechte Stellung geschwenkte Rückenlehne in einer Stützposition,
- Fig. 11: eine Rückenlehne in einer vorderen Stauposition,
- Fig. 12: eine Rückenlehne in ihrer hinteren Stauposition und
- Fig. 13: einen Sitz mit Sitzabschnitt und Rückensitzlehne in einer ausgeklappten Position zur Benutzung für einen Passagier ohne Rollstuhl und zusätzlicher, separat schwenkbarer Rückenlehne, die als Kopfstütze fungiert.

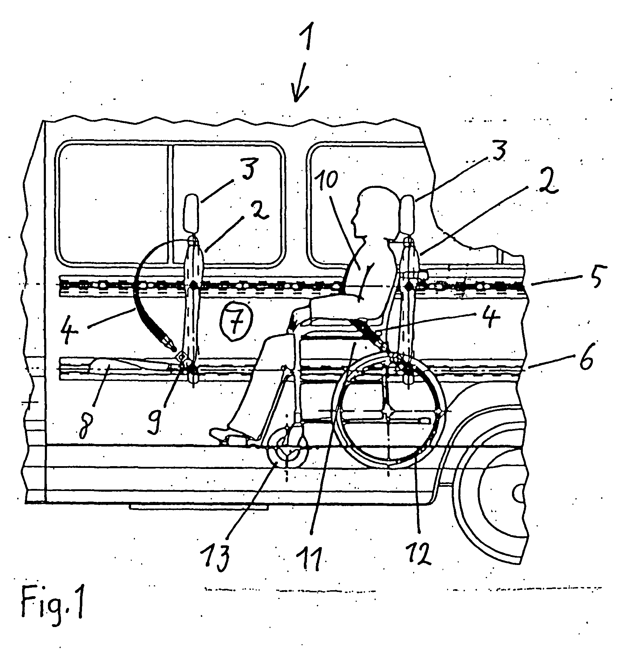

Die Lehnenanordnung 1 der Fig. 1 weist zwei Rücklehnen 2 mit je einer Kopfstütze 3 und einem Sicherheitsgurt 4 auf. Beide Rücklehnen 2 befinden sich in einer Stützposition und sind an einer oberen und einer unteren Schiene 5, 6 befestigt. Die obere und die untere Schiene 5, 6 sind dabei ihrerseits an einer Fahrzeugseitenwand 7 befestigt und verlaufen dabei in Fahrtrichtung des Fahrzeuges, an dessen Seitenwand 7 sie befestigt sind.

An der in der Fig. 1 links dargestellten vorderen Rückenlehne 2 ist ein Sitzabschnitt 8 in einer Sitzposition angeordnet. Der Sitzabschnitt 8 ist um die horizontale Achse 9, die in die Zeichenebene hineinläuft, in Richtung auf die Rückenlehne 2 schwenkbar. Diese vordere Rückenlehne 2 ist zusammen mit ihrem Sitzabschnitt 8 in einer Position zum Befördern einer Person ohne Rollstuhl dargestellt,

Vor der in der Figur 1 rechts dargestellten hinteren Rückenlehne 2 befindet sich ein Rollstuhlfahrer 10 mit Rollstuhl 11 mit großen und kleinen Rädern 12, 13. Diese hintere Rückenlehne 2 stützt zusammen mit der Kopfstütze 3 den Rollstuhlfahrer 10 insbesondere im Bereich seines Kopfes nach hinten ab. Der Rollstuhlfahrer 10 sitzt dabei in seinem Rollstuhl 11 und ist mittels des Sicherheitsgurtes 4 gesichert.

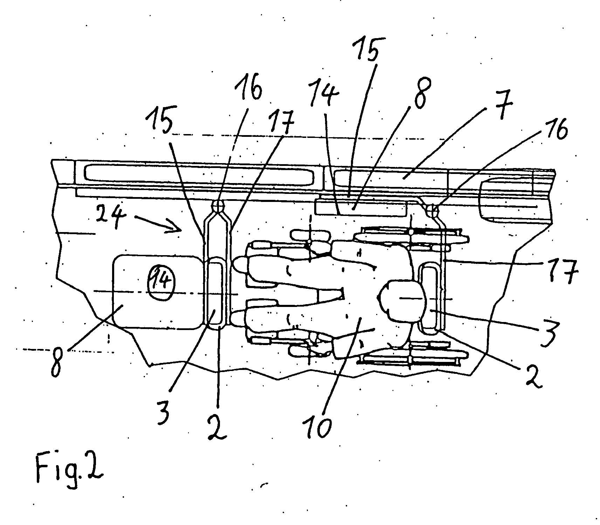

Die Position des hinteren Sitzabschnitts 8 ist hierbei aus der Draufsicht gemäß Fig. 2 zu erkennen. Demnach ist der hintere Sitzabschnitt 8 an die Kraftfahrzeugseitenwand 7 geschwenkt, sodass er sich in seiner Verstauposition befindet und weist mit seiner Polsterseite 14 zum Rollstuhlfahrer 10. Der Polsterseite 14 abgewandt ist ein Schwenkarm 15 an dem Sitzabschnitt 8 angeordnet, welcher um die gemeinsame Schwenkachse 16 schwenkbar an der Kraftfahrzeugseitenwand 7 befestigt ist. Bei dieser vertikalen Schwenkachse 16 fallen die erste vertikale Schwenkachse der Rücklehne mit der zweiten vertikalen Schwenkachse des Sitzabschnitts 8 zusammen.

Die Rückenlehne 2 mit ihrer Kopfstütze 3 ist über einen weiteren Schwenkarm 17 in horizontaler Richtung, insbesondere vom Rollstuhlfahrer 10 zur Kraftfahrzeugseitenwand 7 um die gemeinsame Achse 16 verschwenkbar.

Die vordere Rückenlehne 2 mit ihrer Kopfstütze 3 befindet sich unmittelbar hinter dem vorderen Sitzabschnitt in Stützposition. Die Schwenkarme 15 und 17 des Sitzabschnitts 8 und der Rückenlehne 2 sind in dieser Sitzposition für eine Person ohne Rollstuhl etwa parallel zueinander angeordnet. Der Sitzabschnitt 8 ist zum Sitzen in eine waagerechte Position geklappt und weist mit seiner Polsterseite 14 nach oben, und somit aus der Zeichenebene heraus.

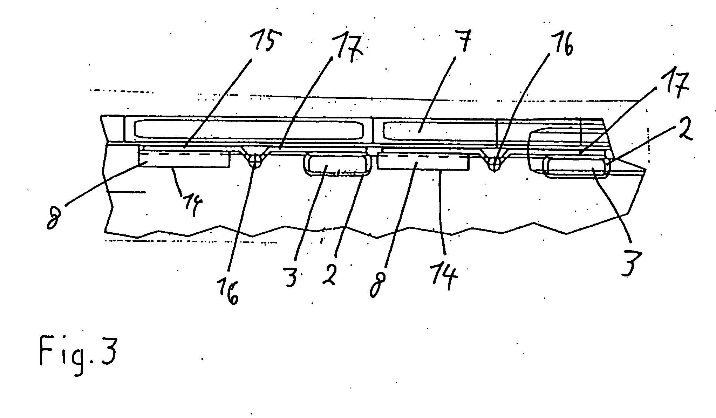

In Fig. 3 sind beide Sitzabschnitte 8 und beide Rückenlehnen 2 mit Kopfstützen 3 in ihrer Verstauposition. Sowohl der Sitzabschnitt 8 als auch die Rückenlehne 2 liegen in dieser Position eng an der Fahrzeugseitenwand 7 an, und lassen dadurch im Innenraum des Fahrzeugs viel Platz, der beispielsweise zum Hereinfahren oder Herausfahrens eines Rollstuhlfahrers genutzt werden kann.

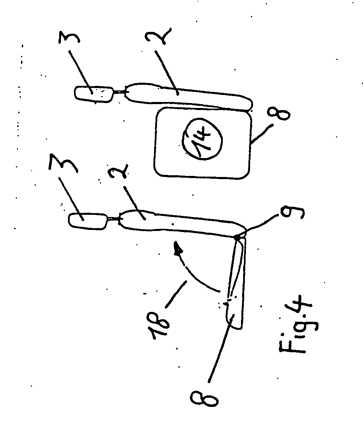

In Fig. 4 ist zur Veranschaulichung die Lehnenanordnung 1 mit einem Sitzabschnitt 8 in Sitzposition und einem weiteren Sitzabschnitt 8 in Verstauposition dargestellt. Die Rückenlehne 2 mit der Kopfstütze 3 befindet sich in beiden Darstellungen der Fig. 4 in ihrer Stützposition. Zum Bewegen des Sitzabschnitts 8 aus der Sitzposition in die Verstauposition ist der Sitzabschnitt 8 zunächst entlang des eingezeichneten Klapppfeils 18 um die horizontale Schwenkachse 9 zur Rückenlehne 2 zu klappen. In einer Zwischenposition ist der Sitzabschnitt 8 dann etwa planparallel zur Rückenlehne 2 angeordnet. Von dieser Zwischenposition heraus erfolgt das Schwenken des Sitzabschnitts 8 zu einer etwaigen Fahrzeugseitenwand hin, bis die im rechten Teil der Fig. 4 dargestellte Position eingenommen ist, bei der die Polsterseite 14 im eingebauten Zustand in einem Fahrzeug zum Innenraum desselben weist.

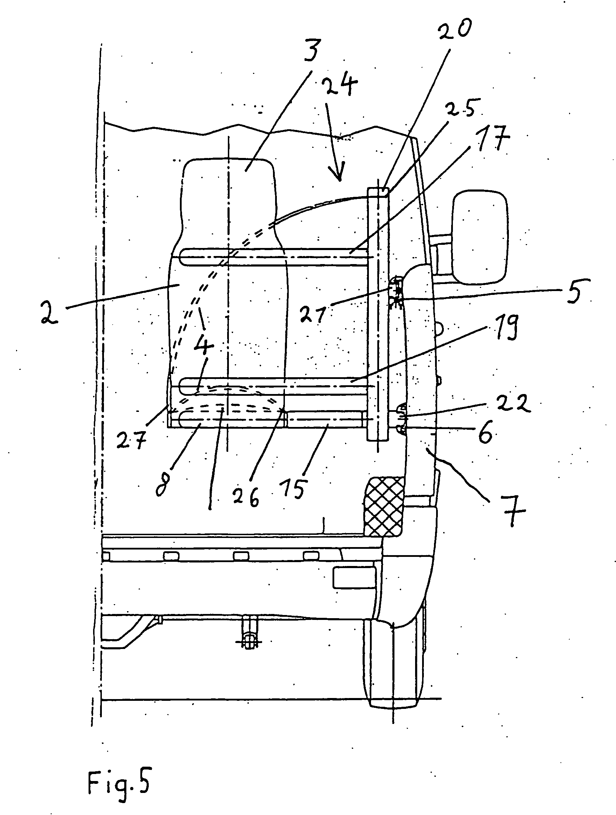

Fig. 5 zeigt einen Schwenkarm 15 für den Sitzabschnitt 8 und einen oberen und einen unteren Schwenkarm 17, 19 für die Rückenlehne 2 mit der Kopfstütze 3. Die drei Schwenkarme 15, 17 und 19 sind mit einem senkrechten Träger 20 als Teil einer Trägerkonstruktion 24 verbunden. Der senkrechte Träger 20 ist über einen oberen und einen unteren Gleiter in der oberen bzw. unteren Schiene 5, 6 eingesetzt und dabei in Fahrtrichtung und gegen Fahrtrichtung des Fahrzeugs, also in die Zeichenebene hinein bzw. aus der Zeichenebene heraus verschiebbar. Der untere Gleiter 22 weist einen Distanzabschnitt 23 auf, um eine senkrechte Anordnung des senkrechten Trägers 20 zu erreichen. Durch die Verwendung einer oberen und einer unteren Schiene 5, 6 und entsprechend eine Verbindung der Trägerkonstruktion 24 über einen oberen und einen unteren Gleiter 21, 22 ergibt sich eine stabile Konstruktion, bei der insbesondere einem Kippen der Lehne 2 und/oder des Sitzabschnitts 8 entgegengewirkt wird. Die obere und untere Schiene 5, 6 sind mit der Seitenwand 7 an ihren Kontaktflächen verklebt.

Der gestrichelt dargestellte Sicherheitsgurt 4 ist mit einem oberen Ende 25 an dem senkrechten Träger 20 und mit seinem unteren Ende 26 an der Rückenlehne 2 befestigt. Das Gurtschloss 27 ist ebenfalls an der Rückenlehne 2 befestigt.

Bei der Lehnenanordnung 1 gemäß Fig. 5 befindet sich die Rückenlehne 2 in Stützposition und der Sitzabschnitt 8 in Sitzposition. Um einen Rollstuhl vor der Rückenlehne 2 positionieren zu können, muss der Sitzabschnitt 8 in seine Verstauposition gebracht werden. Dies erfolgt durch eine kombinierte Schwenkbewegung um die horizontale Schwenkachse 9, die entlang des Schwenkarms 15 verläuft, und die gemeinsame Schwenkachse 16, die in dem senkrechten Träger 20 verläuft.

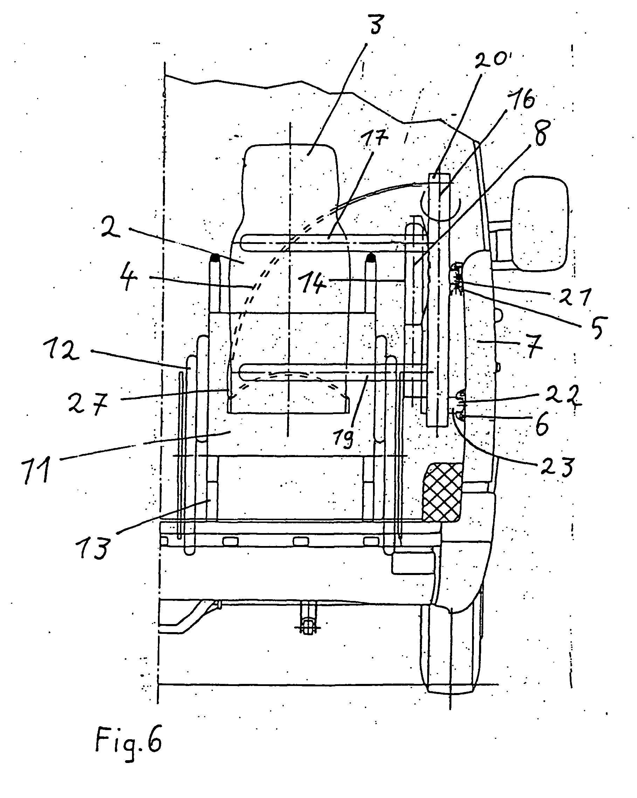

Die Fig. 6 zeigt nun den Sitzabschnitt 8 in seiner Verstauposition. Die Rückenlehne 2 befindet sich in Stützposition und vor der Rückenlehne 2 ist nun ein Rollstuhl 10 angeordnet. Der Sicherheitsgurt 4 ist gegenüber der Anordnung gemäß Fig. 5 in seiner Position verblieben. Zum Anschnallen einer Person in dem Rollstuhl 10 braucht der Sicherheitsgurt 4 lediglich um den Rollstuhl und die darin sitzende Person herumgeführt zu werden.

Die Darstellung gemäß Fig. 6 zeigt, dass auch der untere Schwenkarm 19 im Wesentlichen oberhalb der großen Räder 12 des Rollstuhls 11 angeordnet ist. Die Rückenlehne 2 reicht somit in horizontaler Richtung bis an den Rücken einer im Rollstuhl 11 sitzenden Person und entsprechend reicht die Kopfstütze 3 in horizontaler Richtung bis an den Kopf der Person heran.

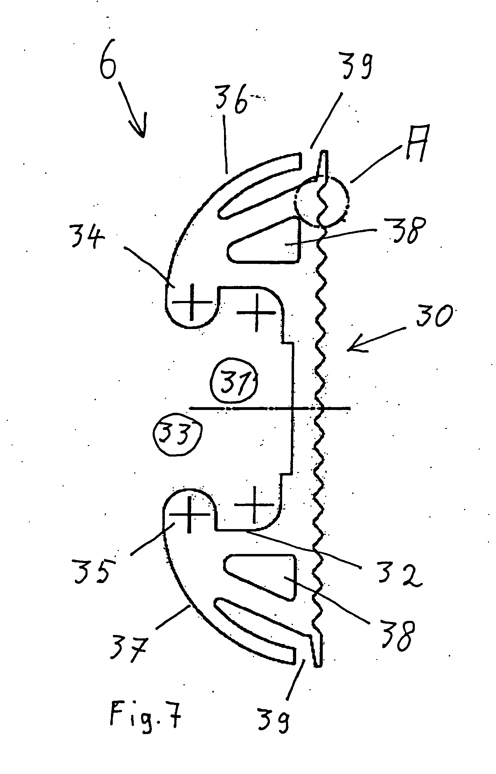

Die untere Schiene 6 gemäß Fig. 7 ist als Hohlprofil ausgestaltet mit einer Befestigungsfläche 30 zum Verkleben der Schiene 6 mit einer Kraftfahrzeugseitenwand. Die untere Schiene 6 weist einen Gleitraum 31 zum Aufnehmen eines Gleiters 22 auf. Zum Tragen eines Gleiters 22 weist die untere Schiene 6 eine Tragfläche 32 auf, auf der Rollen eines Gleiters laufen können. Eine Verbindung zwischen einem eingesetzten Gleiter und einer Trägerkonstruktion ist eine Öffnung 33 vorgesehen, die zwischen einer ersten und einer zweiten Nase 34, 35 angeordnet ist. Die beiden Nasen 34, 35 umschließen den Gleitraum 31 dabei so, dass ein Gleiter nicht durch die Öffnung 33 aus der unteren Schiene herausrutschen kann. Auf der zweiten Nase 35 wird bestimmungsgemäß auch eine Rolle geführt.

Die untere Schiene 6 ist an ihrer oberen und unteren zum Fahrgastraum weisenden Oberfläche 36, 37 rund ausgestaltet, um Gefahrenquellen wie beispielsweise scharfe Kanten zu vermeiden. Darüber hinaus ist durch die runde Ausgestaltung ein gefälliges Aussehen erreichbar. Zur Gevvichtseinsparung sind Aussparungen 38 vorgesehen. Die Öffnungen 39 sind zum Befestigen einer Fahrzeuginnenverkleidung ausgebildet.

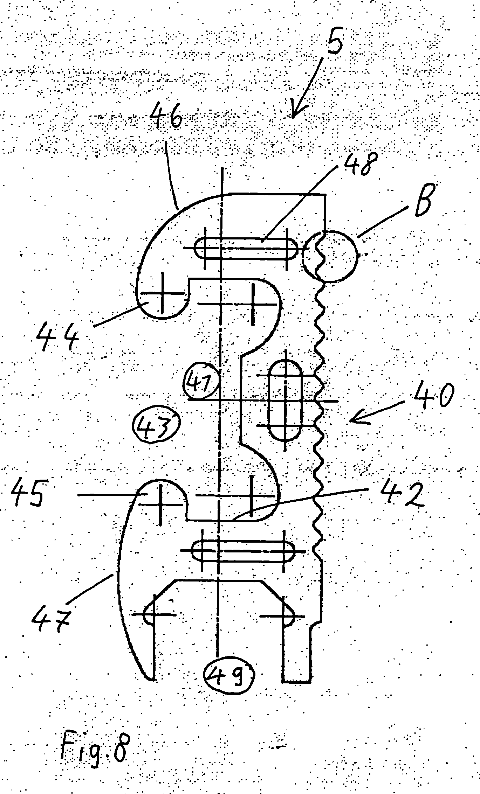

Auch die obere Schiene 5 gemäß Fig. 8 ist als Hohlprofil mit einer Befestigungsfläche 40 zum Verkleben an einer Seitenwand ausgebildet. Der Gleitraum 41 ist an die Form eines Gleiters 21 angepasst, zum Führen eines als Sicherheitsstein ausgebildeten Gleitsteins. Eine Tragfläche 42 ist vorgesehen, um alternativ eine Rolle zu führen. Die Öffnung 43 ist durch die erste und zweite Nase 44, 45 vorgegeben. Auch die obere Schiene 5 weist eine runde obere und untere Oberfläche 46, 47 auf und es sind Aussparungen 48 zur Gewichtseinsparung vorgesehen.

Gegenüber der unteren Schiene 6 weist die obere Schiene 5 zusätzlich eine nach unten weisende Öffnung 49 auf, in der eine Rolle eines Gleiters zu führen ist. Eine Führung der Trägerkonstruktion erfolgt somit durch Rollen in der unteren Schiene 6 und der Öffnung 49 der oberen Schiene 5. Zur Erhöhung der Sicherheit wird zusätzlich ein Sicherheitsstein in dem Gleitraum 41 der oberen Schiene 5 geführt.

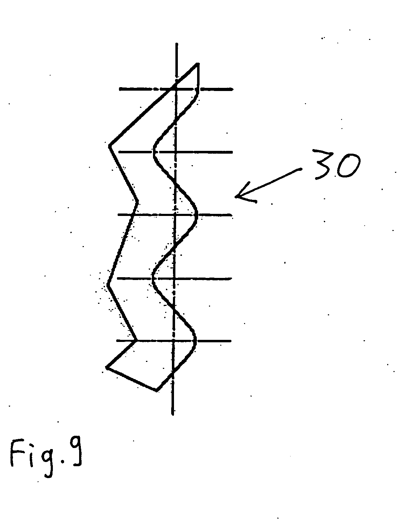

Die Fig. 9 zeigt eine Vergrößerung des Ausschnitts A der Fig. 7. Aus dieser vergrößerten Darstellung wird deutlich, dass die Befestigungsfläche 30 durch ihre etwa wellenförmige Ausgestaltung eine stark vergrößerte Oberfläche aufweist, was zu einer höheren Festigkeit bei ihrer Verklebung mit einer Kraftfahrzeugseitenwand 7 führt. Die Vergrößerung gemäß Fig. 9 entspricht auch einer Vergrößerung des Ausschnitts B der Fig. 8. Die wellenförmige Ausgestaltung der Befestigungsfläche 30 bzw. 40 erhöht somit die Hafteigenschaften.

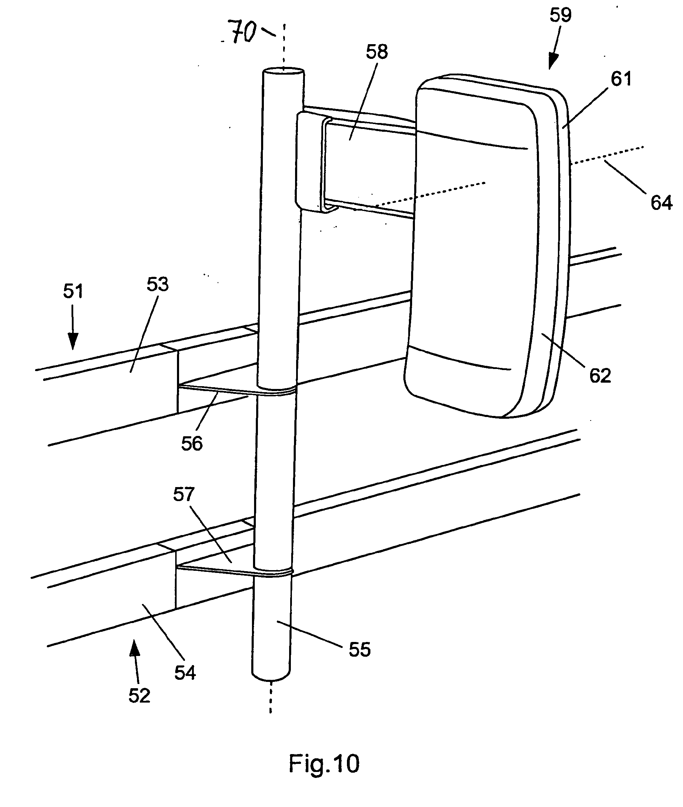

In Figur 10 ist eine obere Schiene 51 und eine untere Schiene 52 dargestellt, die jeweils eine Verkleidung 53 und 54 aufweisen. An den Schienen 51; 52 ist eine senkrechte Säule 55 über zwei Befestigungsabschnitte 56 und 57 befestigt. Die Befestigungsabschnitte 56 und 57 tragen die Säule 55 in den Schienen 51 und 52, wobei die Befestigungsabschnitte 56, 57 in den Schienen 51, 52 fest fixiert sind, jedoch gelöst werden können, um ihre Position entlang der Schienen 51, 52 zu ändern. Im oberen Bereich der Säule 55 ist ein Arm 58 angeordnet, der die Rückenlehne 59 trägt. Der Arm 58 ist zusammen mit der Rückenlehne 59 um die Säule 55 und damit um eine vertikale Schwenkachse 70 gegen eine Fahrzeugseitenwand 60 verschwenkbar. Die Figur 10 zeigt die Rückenlehne 59 in ihrer Stützposition, bei der sie zusammen mit dem Arm 58 zur Fahrzeugseitenwand 60 quer absteht und in das Fahrzeuginnere ragt. Die Rückenlehne 59 weist eine hintere Schale 61 und ein darin angeordnetes Polster 62 auf. Das Polster 62 hat eine Stützfläche 63, die hinter einem Rollstuhlfahrer angeordnet wird, wobei ihr gemäß Figur 10 oberer Bereich hinter dem Kopf des Rollstuhlfahrers und der untere Bereich hinter dem Rücken des Rollstuhlfahrers angeordnet wird und die genannten Körperteile dabei stützt. Zur Veranschaulichung ist eine horizontale Funktionsachse 64 gestrichelt eingezeichnet. Diese horizontale Funktionsachse verläuft senkrecht zur Stützfläche 63. Der Schnittpunkt liegt etwa in der Mitte der Schnittfläche zwischen dem Arm 58 und der Rückenlehne 59. Dieser Schnittpunkt ist damit etwa in der Mitte der gemäß Figur 10 oberen Hälfte der Stützfläche 63. Ein Zurückschwenken der Rückenlehne 59 um 90° um die horizontale Funktionsachse 64 würde zu einem Verdecken des in Figur 10 sichtbaren Teils des Arms 58 führen.

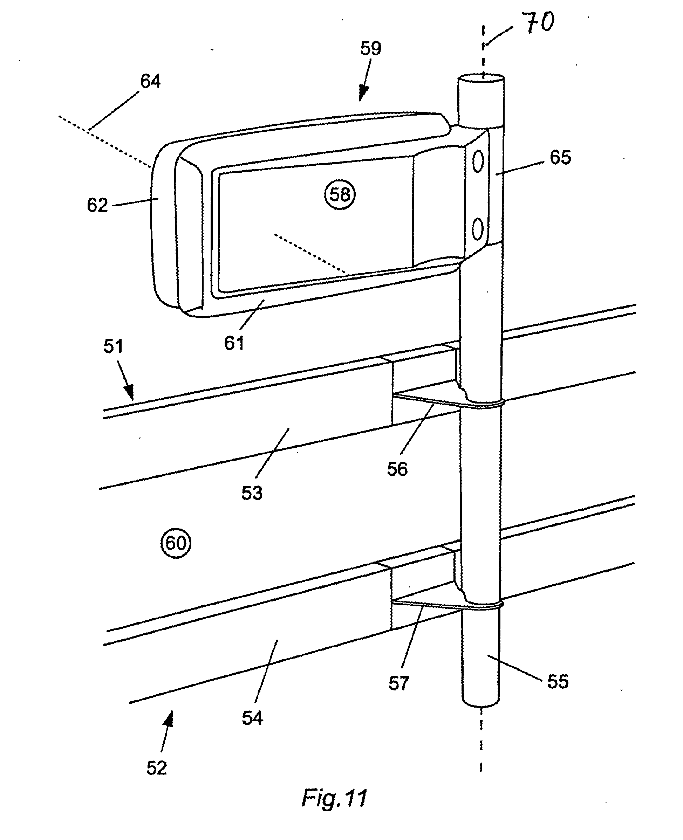

Figur 11 zeigt die Rückenlehne 59 in ihrer vorderen Stauposition, wobei die Rückenlehne 59 hierbei im Wesentlichen waagerecht ausgebildet ist. Das heißt, im Vergleich zu Figur 10 ist die Rückenlehne 59 um 90° um die horizontale Funktionsachse 64 geschwenkt. In dieser Position fungiert die Rückenlehne 59 nur als Kopfstütze. Sie ist hierbei im Wesentlichen parallel zum Arm 58 und dabei aus Sicht des Polsters 62 vor dem Arm 58 angeordnet. Der Arm 58 ist über einen Schwenkabschnitt 65 schwenkbar mit der Säule 55 verbunden und somit um die vertikale Achse 70 schwenkbar.

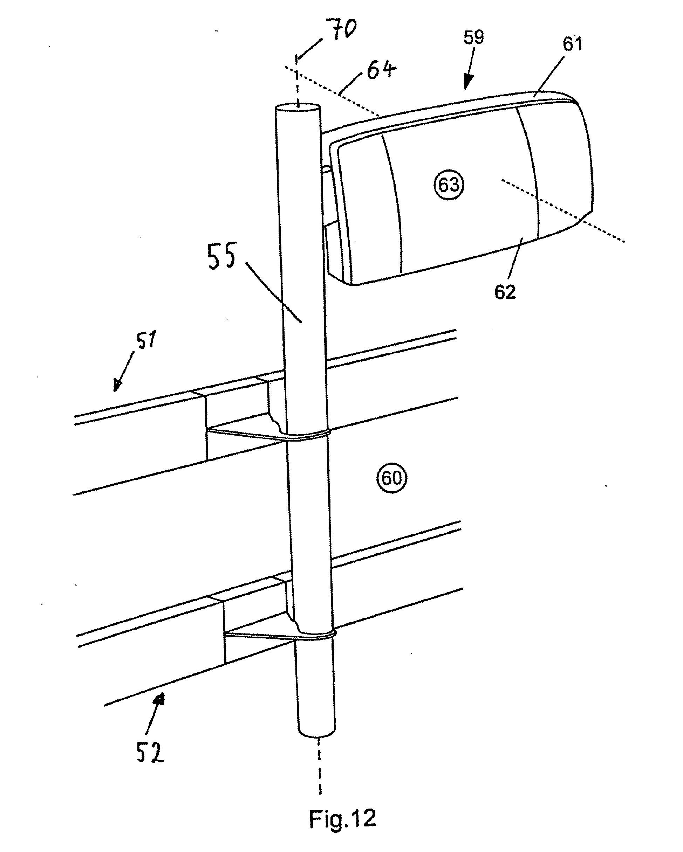

Aus der Figur 12 ist die Rückenlehne 59 in ihrer hinteren Stauposition dargestellt. Die hintere Schale 61 weist hierbei zur Fahrzeugseitenwand 60 und das Polster 62 mit seiner Stützfläche 63 zum Fahrzeuginneren. Auch die Rückenlehne 59 gemäß der Figur 12 ist im Vergleich zur Figur 10 um 90° um die horizontale Funktionsachse 64 gedreht.

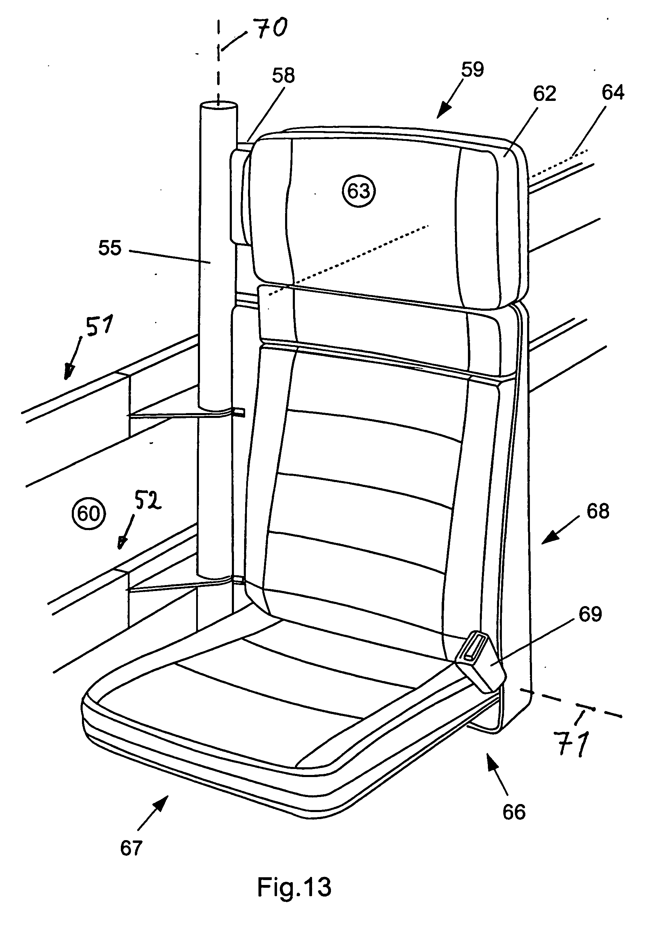

Figur 13 zeigt einen Sitz 66, der einen Sitzabschnitt 67 und eine Rückensitzlehne 68 aufweist. Der Sitz 66 ist an der Säule 55 über die Rückenlehne 68 befestigt. Im Verbindungsbereich von Rückenlehne 68 und Sitzabschnitt 67 weist der Sitz 66 eine horizontale Schwenkachse 71 auf, um die der Sitzabschnitt 67 gegen die Rückensitzlehne 68 geklappt werden kann. Gleichzeitig wird der Sitz 67 in diesem Verbindungsbereich fest von der Rückenlehne 68 gehalten- Hier ist außerdem noch ein Gurtschloss 69 für einen Sicherheitsgurt dargestellt. Zusätzlich ist noch die separate Rückenlehne 59 als Ergänzung zum Sitz 66 vorhanden. Sie fungiert hier als Kopfstütze. Die Rückenlehne 59 ist getrennt zum Sitz 66 und der Säule 55 mittels Arm 58 befestigt und um diese unabhängig von dem Sitz 66 schwenkbar. Trotz der getrennten Schwenkbarkeit von Rückenlehne 59 und Sitz 66 bilden diese zusammen eine Sitzeinheit mit einem Sitzabschnitt 67, einer Rückensitzlehne 68 und einer weiteren Rückenlehne 59 als Kopfstütze. Diese Sitzanordnung ist für eine Person ohne Rollstuhl vorgesehen.

Um die in Figur 13 dargestellte Anordnung für einen Rollstuhlfahrer verwendbar zu machen, ist der Sitzabschnitt 67 gegen die Rückensitzlehne 68 um die horizontale Achse 71 im Bereich des Gurtschlosses 69 zu klappen und die Rückensitzlehne 68 zusammen mit dem Sitzabschnitt 67 dann um die vertikale Säule 55 gegen die Fahrzeugseitenwand 60 zu schwenken. Hiernach verbleibt die Rückenlehne 59 in ihrer dargestellten Position. Um diese schließlich als Rückenstütze für einen Rollstuhlfahrer verwendbar zu machen, ist sie um etwa 90° um die horizontale Funktionsachse 64 mit dem im gemäß Figur 13 linken Teil nach unten zu schwenken. Gegebenenfalls kann der Abstand zwischen der Rückenlehne 59 über eine Längenänderung des Arms 58 erreicht werden. Es kann erforderlich sein, die Rückenlehne 59 zwischenzeitlich zur Fahrzeugsseitenwand 60 nach hinten zu schwenken, damit der Rollstuhlfahrer passieren kann.

## Patentansprüche

1. Lehnenanordnung (1) zum Einbau in ein Kraftfahrzeug zur Beförderung von Rollstu hlfahrern,
(a) mit einer Rückenlehne (2, 59),
(a1) die aus einer Betriebsstellung um eine erste, vertikale Schwenkachse (16; 70) aus dem Rollweg eines die Anordnung passierenden Rollstuhlfahrers (10), in eine Ruhestellung wegschwenkbar und nach der Passage zum Stützen eines davor in Fahrtrichtung stehenden Rollstuhlfahrers bis an dessen Rücken in die Betriebsstellung zurückschwenkbar ist, und
(a2) die sich bei im Fahrzeug montierter Lehnenanordnung in ihrer Ruhestellung an einer Fahrzeugseitenwand befindet, und
(b) mit an der Fahrzeugseitenwand angeordneten Mitteln (51, 52, 56, 57) zum schwenkbaren Befestigen der Anordnung.

2. Lehnenanordnung (1) nach Anspruch 1, **dadurch gekennzeichnet, dass** die Rückenlehne (2) eine Kopfstütze (3) aufweist.

3. Lehnenanordnung (1) nach Anspruch 1, **gekennzeichnet durch** einen Sicherheitsgurt (4), der zumindest teilweise an der Rückenlehne befestigt ist.

4. Lehnenanordnung (1) nach einem der vorstehenden Ansprüche, **dadurch gekennzeichnet, dass** ein Sitzabschnitt (8) vorgesehen ist, der um eine horizontale Schwenkachse (9) schwenkbar mit dem Fahrzeug verbindbar ist, und die Rückenlehne (2) und der Sitzabschnitt (8) dabei voneinander unabhängig schwenkbar sind.

5. Lehnenanordnung (1) nach Anspruch 4, **dadurch gekennzeichnet, dass** die horizontale Schwenkachse (9) um eine zweite vertikale Schwenkachse schwenkbar mit dem Fahrzeug verbindbar ist.

6. Lehnenanordnung (1) nach einem der vorstehenden Ansprüche, **dadurch gekennzeichnet, dass** die Rückenlehne (2) und/oder der Sitzabschnitt (8) mittels einer Trägerkonstruktion (24) an einer Befestigungsvorrichtung mit dem Fahrzeug verbindbar ist.

7. Lehnenanordnung (1) nach Anspruch 6, **dadurch gekennzeichnet, dass** die Befestigungsvorrichtung mindestens eine Schiene (5, 6) aufweist, und die Trägerkonstruktion (24) mit mindestens einem Gleiter (21, 22) an der mindestens einen Schiene (5, 6), insbesondere in Fahrtrichtung des Fahrzeugs, verschiebbar mit dem Fahrzeug verbindbar ist.

8. Lehnenanordnung (1) nach Anspruch 7, **dadurch gekennzeichnet, dass** die mindestens eine Schiene (5, 6) mindestens einen der Gleiter (21, 22) im in die Schiene (5, 6) eingesetzten Zustand so umfasst, dass er nur in Längsrichtung der Schiene (5, 6) bewegbar ist.

9. Lehnenanordnung (1) nach Anspruch 8, **dadurch gekennzeichnet, dass** mindestens einer der Gleiter (21, 22) mindestens eine Rolle zum Rollen des Gleiters in der Schiene und/oder mindestens einen Gleitstein zum Verhindern des Herausrutschens aus der Schiene (5, 6) in einer Richtung quer zur Längsrichtung der Schiene (5, 6) aufweist.

10. Lehnenanordnung (1) nach Anspruch 9, **dadurch gekennzeichnet, dass** zwei Schienen (5, 6) mit je einem Gleiter (21, 22) vorgesehen sind und einer der Gleiter (21, 22) mindestens eine Rolle und der andere Gleiter (21, 22) mindestens einen Gleitstein aufweist.

11. Lehnenanordnung (1) nach einem der Ansprüche 7-10, **dadurch gekennzeichnet, dass** die mindestens eine Schiene (5, 6) eine Rasterung zum Fixieren je eines Gleiters (21, 22) in durch die Rasterung vorgegebenen Positionen aufweist.

12. Lehnenanordnung (1) nach einem der vorstehenden Ansprüche,
**dadurch gekennzeichnet, dass** wenigstens eine bzw. die Schiene (5, 6; 51, 52) zum Befestigen der Lehnenanordnung im bestimmungsgemäßen Zustand an der Fahrzeugseitenwand (60) verlaufend parallel zu einem Fahrzeugboden und/oder horizontal angeordnet sind.

13. Lehnenanordnung (1) nach einem der vorstehenden Ansprüche,
bei der die Lehnenanordnung (1) wenigstens eine vertikale Säule (55) zum Schwenken der Lehnenanordnung (1) oder eines Teils davon aufweist.

14. Lehnenanordnung (1) nach einem der vorstehenden Ansprüche,
bei der die die Rückenlehne (59) in Bezug auf die Fahrtrichtung des Kraftfahrzeugs jeweils in eine vordere und eine hintere Stauposition an die Seitenwand (60) schwenkbar ist.

15. Lehnenanordnung (1) nach einem der vorstehenden Ansprüche, bei der die Rückenlehne (59) um eine horizontale Funktionsachse (64) schwenkbar ist.

16. Lehnenanordnung (1) nach Anspruch 15,
**dadurch gekennzeichnet, dass** die Rückenlehne (59) eine längliche Stützfläche (63) zum Stützen des davor stehenden Rollstuhlfahrers aufweist.

17. Lehnenanordnung (1) nach Anspruch 15 oder 16, **dadurch gekennzeichnet, dass** die Funktionsachse (64) senkrecht zur Stützfläche (63) und außerhalb eines Mittelpunktes der Stützfläche (63) dazu verläuft.

18. Lehnenanordnung (1) nach Anspruch 17, **dadurch gekennzeichnet, dass** die Funktionsachse (64) weiter entfernt von der ersten vertikalen Schwenkachse (70) verläuft, als der Mittelpunkt der Stützfläche (63).

19. Lehnenanordnung (1) nach einem der vorstehenden Ansprüche,
bei der die Rückenlehne (59) mittels eines Arms (58) schwenkbar an der Befestigungsvorrichtung, insbesondere an der bzw. einer vertikalen Säule (55) befestigt ist.

20. Lehnenanordnung (1) nach Anspruch 19, **dadurch gekennzeichnet, dass** der Arm (58) ausziehbar ist.

21. Lehnenanordnung (1) nach einem der vorstehenden Ansprüche,
bei der wenigstens eine vertikale Säule (55) einen Sitz (66) trägt, der aus einem Sitzabschnitt (67) und einer diesem zugeordnetem separaten Rückensitzlehne (68) besteht und in seiner Betriebsstellung unterhalb der Rückenlehne (59) für den Rollstuhlfahrer endet.

22. Lehnenanordnung (1) nach Anspruch 21, **dadurch gekennzeichnet, dass** aus einer Betriebsposition heraus in einem ersten Schritt der Sitzabschnitt (67) um eine horizontale Achse (71) gegen die Rückensitzlehne (68) klappbar und in einem zweiten Schritt die Rückensitzlehne (68) zusammen mit dem Sitzabschnitt (67) um eine vertikale Achse (70), insbesondere um eine vertikale Säule (55), an die Fahrzeugseitenwand (60) schwenkbar ist.

23. Fahrzeug mit mindestens einer Lehnenanordnung (1) nach einem der vorstehenden Ansprüche.

24. Fahrzeug nach Anspruch 23, an dem mehrere Lehnenanordnungen (1) vorgesehen sind, deren Trägerkonstruktion (24) in mindestens zwei gemeinsamen Schienen (5, 6) eingreift.

25. Verfahren zum Befördern eines Rollstuhlfahrers, unter Verwendung einer Lehnenanordnung (1) nach einem der vorstehenden Ansprüche, umfassend die Schritte:
• Fahren des Rollstuhlfahrers mit Rollstuhl in ein Fahrzeug,
• Schwenken einer Rückenlehne (59) von einer Seitenwand (60) des Fahrzeugs um eine vertikale Achse (70) in eine Position hinter dem Rücken des Rollstuhlfahrers und
• Arretieren der Rückenlehne (59).

26. Verfahren nach Anspruch 25, weiter umfassend den Schritt:
• Schwenken der Rückenlehne (59) um eine horizontale Funktionsachse (64).

## Claims

1. Backrest arrangement (1) for installation in a motor vehicle for transporting wheelchair users,
(a) having a backrest (2, 59)
(a1) which is pivotable away from an operating position about a first, vertical pivot axis (16; 70) out of the rolling path of a wheelchair user (10) passing the arrangement, into a rest position and after a wheelchair user has passed is pivotable back into the operating position to support a wheelchair user, located in front of it in the direction of travel, as far as the back of said user, and
(a2) which, when the backrest arrangement is fitted in the vehicle, is situated in its rest position against a vehicle side-panel, and
(b) having means (51, 52, 56, 57), arranged on the vehicle side-panel, for pivotably fastening the arrangement.

2. Backrest arrangement (1) according to Claim 1, **characterised in that** the backrest (1) has a headrest (3).

3. Backrest arrangement (1) according to Claim 1, **characterised by** a safety belt (4) which is fastened at least partly to the backrest.

4. Backrest arrangement (1) according to one of the preceding claims, **characterised in that** a seat portion (B) which is connectable to the vehicle so as to be pivotable about a horizontal pivot axis (9) is provided, and the backrest (2) and the seat portion (8) are in this case pivotable independently of one another.

5. Backrest arrangement (1) according to Claim 4, **characterised in that** the horizontal pivot axis (9) is connectable to the vehicle so as to be pivotable about a second, vertical pivot axis.

6. Backrest arrangement (1) according to one of the preceding claims, **characterised in that** the backrest (2) and/or the seat portion (8) are connectable to the vehicle by means of a support structure (24) on a fastening device.

7. Backrest arrangement (1) according to Claim 6, **characterised in that** the fastening device has at least one rail (5, 6), and the support structure (24) is connectable to the vehicle, so as to be displaceable in particular in the direction of travel of the vehicle, by at least one slider (21, 22) on the at least one rail (5, 6).

8. Backrest arrangement (1) according to Claim 7, **characterised in that** the at least one rail (5, 6) embraces at least one of the sliders (21, 22), in the state inserted in the rail (5, 6), so that the slider is movable only in the longitudinal direction of the rail (5, 6).

9. Backrest arrangement (1) according to Claim 8, **characterised in that** at least one of the sliders (21, 22) has at least one roller for the rolling of the slider in the rail and/or at least one sliding block for preventing it from slipping out of the rail (5, 6) in a direction transversely to the longitudinal direction of the rail (5, 6).

10. Backrest arrangement (1) according to Claim 9, **characterised in that** two rails (5, 6) with a respective slider (21, 22) are provided and one of the sliders (21, 22) has at least one roller and the other slider (21, 22) has at least one sliding block.

11. Backrest arrangement (1) according to one of claims 7 - 10, **characterised in that** the at least one rail (5, 6) has indexing for fixing a respective slider (21, 22) in positions preset by the indexing.

12. Backrest arrangement (1) according to one of the preceding claims, **characterised in that** at least one or the rail (5, 6; 51, 52) for fastening the backrest arrangement in the specified state is arranged on the vehicle side-panel (60) so as to run parallel to a vehicle floor and/or horizontally.

13. Backrest arrangement (1) according to one of the preceding claims, in which the backrest arrangement (1) has at least one vertical column (55) for the pivoting of the backrest arrangement (1) or part thereof.

14. Backrest arrangement (1) according to one of the preceding claims, in which the backrest (59) is pivotable, with respect to the direction of travel of the motor vehicle, in each case into a front and a rear stowed position against the side-panel (60).

15. Backrest arrangement (1) according to one of the preceding claims, in which the backrest (59) is pivotable about a horizontal functional axis (64).

16. Backrest arrangement (1) according to Claim 15, **characterised in that** the backrest (59) has an elongated supporting surface (63) for supporting the wheelchair user located in front of it.

17. Backrest arrangement (1) according to Claim 15 or 16, **characterised in that** the functional axis (64) runs perpendicularly to the supporting surface (63) and outside a centre of the supporting surface (63).

18. Backrest arrangement (1) according to Claim 17, **characterised in that** the functional axis (64) runs at a distance further away from the first vertical pivot axis (70) than the centre of the supporting surface (63).

19. Backrest arrangement (1) according to one of the preceding claims, in which the backrest (59) is fastened by means of an arm (58) pivotably on the fastening device, in particular on the or a vertical column (55).

20. Backrest arrangement (1) according to Claim 19, **characterised in that** the arm (58) is extendible.

21. Backrest arrangement (1) according to one of the preceding claims, in which at least one vertical column (55) carries a seat (66) which consists of a seat portion (67) and a separate seat back (68) assigned thereto and which in its operating position ends beneath the backrest (59) for the wheelchair user.

22. Backrest arrangement (1) according to Claim 21, **characterised in that**, from an operating position, in a first step the seat portion (67) is foldable about a horizontal axis (71) against the seat back (68) and in a second step the seat back (68) together with the seat portion (67) is pivotable about a vertical axis (70), in particular about a vertical column (55), against the vehicle side-panel (60).

23. Vehicle having at least one backrest arrangement (1) according to one of the preceding claims.

24. Vehicle according to Claim 23, on which a plurality of backrest arrangements (1) are provided, the support structure (24) of which engages in at least two common rails (5, 6).

25. Procedure for transporting a wheelchair user, using a backrest arrangement (1) according to one of the preceding claims, comprising the steps:
• conveying the wheelchair user with the wheelchair into a vehicle,
• pivoting a backrest (59) from a side-panel (60) of the vehicle about a vertical axis (70) into a position behind the back of the wheelchair user and
• locking the backrest (59).

26. Procedure according to Claim 25, further comprising the step;
• pivoting the backrest (59) about a horizontal functional axis (64).

## Revendications

1. Système de dossier (1) à monter dans un véhicule automobile pour le transport de personnes en fauteuil roulant,
(a) avec un dossier (2, 59),
(a1) qui peut pivoter d'une position de service autour d'un premier axe de pivotement vertical (16 ; 70) hors du chemin de roulement d'une personne en fauteuil roulant (10) passant le système, à une position de repos et revenir par pivotement à la position de service après le passage pour soutenir une personne en fauteuil roulant située devant dans le sens de la marche jusqu'à son dos, et
(a2) qui, lorsque le système de dossier est monté dans le véhicule, se trouve dans sa position de repos au niveau d'une paroi latérale du véhicule, et
b) avec des moyens (51, 52, 56, 57) disposés au niveau de la paroi latérale du véhicule et destinés à la fixation pivotante du système.

2. Système de dossier (1) selon la revendication 1, **caractérisé en ce que** le dossier (2) présente un appuie-tête (3).

3. Système de dossier (1) selon la revendication 1, **caractérisé par** une ceinture de sécurité (4) qui est fixée au moins en partie au niveau du dossier.

4. Système de dossier (1) selon l'une quelconque des revendications précédentes, **caractérisé en ce qu'**il est prévu une assise (8) qui peut être reliée au véhicule de manière pivotante autour d'un axe de pivotement horizontal (9), et le dossier (2) et l'assise (8) peuvent pivoter ce faisant indépendamment l'un de l'autre.

5. Système de dossier (1) selon la revendication 4, **caractérisé en ce que** l'axe de pivotement horizontal (9) peut être relié au véhicule de manière pivotante autour d'un deuxième axe de pivotement vertical.

6. Système de dossier (1) selon l'une quelconque des revendications précédentes, **caractérisé en ce que** le dossier (2) et/ou l'assise (8) peut être relié au véhicule au niveau d'un dispositif de fixation au moyen d'une structure porteuse (24).

7. Système de dossier (1) selon la revendication 6, **caractérisé en ce que** le dispositif de fixation présente au moins un rail (5, 6) et la structure porteuse (24) peut être reliée au véhicule de manière coulissante avec au moins un patin (21, 22) au niveau de l'au moins un rail (5, 6), en particulier dans le sens de la marche du véhicule.

8. Système de dossier (1) selon la revendication 7, **caractérisé en ce que** l'au moins un rail (5, 6) comporte au moins un des patins (21, 22) à l'état engagé dans le rail (5, 6) de telle sorte qu'il ne peut être déplacé que dans le sens longitudinal du rail (5, 6).

9. Système de dossier (1) selon la revendication 8, **caractérisé en ce qu'**au moins un des patins (21, 22) présente au moins un galet pour faire rouler le patin dans le rail et/ou au moins un coulisseau pour empêcher la sortie du rail (5, 6) dans une direction transversale au sens longitudinal du rail (5, 6).

10. Système de dossier (1) selon la revendication 9, **caractérisé en ce que** sont prévus deux rails (5, 6) avec respectivement un patin (21, 22) et un des patins (21, 22) présente au moins un galet et l'autre patin (21, 22) présente au moins un coulisseau.

11. Système de dossier (1) selon l'une quelconque des revendications 7 à 10, **caractérisé en ce que** l'au moins un rail (5, 6) présente un crantage pour fixer respectivement un patin (21, 22) dans des positions prédéfinies par le crantage.

12. Système de dossier (1) selon l'une quelconque des revendications précédentes,
**caractérisé en ce qu'**au moins un ou le rail (5, 6 ; 51, 52) est disposé horizontalement et/ou parallèlement au plancher du véhicule pour fixer le système de dossier à l'état conforme à l'affectation au niveau de la paroi latérale du véhicule (60).

13. Système de dossier (1) selon l'une quelconque des revendications précédentes,
dans lequel le système de dossier (1) présente au moins une colonne verticale (55) pour pivoter le système de dossier (1) ou une partie de celui-ci.

14. Système de dossier (1) selon l'une quelconque des revendications précédentes,
dans lequel le dossier (59) peut pivoter, par rapport au sens de la marche du véhicule automobile, respectivement dans une position de rangement avant et une position de rangement arrière au niveau de la paroi latérale (60).

15. Système de dossier (1) selon l'une quelconque des revendications précédentes, dans lequel le dossier (59) peut pivoter autour d'un axe fonctionnel horizontal (64).

16. Système de dossier (1) selon la revendication 15,
**caractérisé en ce que** le dossier (59) présente une surface d'appui (63) allongée pour soutenir la personne en fauteuil roulant située devant.

17. Système de dossier (1) selon la revendication 15 ou 16, **caractérisé en ce que** l'axe fonctionnel (64) s'étend perpendiculairement à la surface d'appui (63) et en dehors d'un point central de la surface d'appui (63).

18. Système de dossier (1) selon la revendication 17, **caractérisé en ce que** l'axe fonctionnel (64) s'étend de manière plus éloignée du premier axe de pivotement vertical (70) que le point central de la surface d'appui (63).

19. Système de dossier (1) selon l'une quelconque des revendications précédentes,
dans lequel le dossier (59) est fixé de manière pivotante au niveau du dispositif de fixation, en particulier au niveau de la ou d'une colonne verticale (55) au moyen d'un bras (58).

20. Système de dossier (1) selon la revendication 19, **caractérisé en ce que** le bras (58) est télescopique.

21. Système de dossier (1) selon l'une quelconque des revendications précédentes,
dans lequel l'au moins une colonne verticale (55) porte un siège (66) qui se compose d'une assise (67) et d'un dossier (68) séparé associé et se termine dans sa position de service sous le dossier (59) pour la personne en fauteuil roulant.

22. Système de dossier (1) selon la revendication 21, **caractérisé en ce que** dans une première étape, l'assise (67) peut être rabattue, à partir d'une position de service, autour d'un axe horizontal (71) contre le dossier (68) et dans une deuxième étape, le dossier (68) peut pivoter conjointement avec l'assise (67) autour d'un axe vertical (70), en particulier autour d'une colonne verticale (55), au niveau de la paroi latérale du véhicule (60).

23. Véhicule avec au moins un système de dossier (1) selon l'une quelconque des revendications précédentes.

24. Véhicule selon la revendication 23, au niveau duquel plusieurs systèmes de dossier (1) sont prévus, dont la structure porteuse (24) prend dans au moins deux rails communs (5, 6).

25. Procédé de transport d'une personne en fauteuil roulant, utilisant un système de dossier (1) selon l'une quelconque des revendications précédentes, comprenant les étapes consistant à :
- conduire la personne en fauteuil roulant avec le fauteuil roulant dans un véhicule,
- pivoter un dossier (59) d'une paroi latérale (60) du véhicule autour d'un axe vertical (70) à une position derrière le dos de la personne en fauteuil roulant et
- bloquer le dossier (59).

26. Procédé selon la revendication 25, comprenant en outre l'étape consistant à :
- pivoter le dossier (59) autour d'un axe fonctionnel horizontal (64).
